# EUROPEAN PATENT SPECIFICATION

(11) **EP 0 771 399 B1**
(45) Date of publication and mention of the grant of the patent: **13.10.1999**
(21) Application number: 95923628.2
(22) Date of filing: 13.06.1995
(51) Int. Cl.: F16L 5/02

(54) **A DEVICE AT A WALL LEAD-THROUGH**
VORRICHTUNG ZUR DURCHFÜHRUNG VON LEITUNGEN DURCH EINE WAND
DISPOSITIF DESTINE A UNE TRAVERSEE MENAGEE DANS UN MUR

(30) Priority: 23.06.1994 SE 9402231
(43) Date of publication of application: 07.05.1997
(73) Proprietor: Östberg, Hans, 770 70 Langshyttan (SE)
(72) Inventor: Östberg, Hans, 770 70 Langshyttan (SE)
(74) Representative: Olsson, Jan
(86) International application number: SE9500707
(87) International publication number: WO9600360

(56) References cited:
- EP-A- 0 284 758
- WO-A-94/06980
- GB-A- 612 511

## Description

### FIELD OF THE INVENTION AND PRIOR ART

The present invention relates to a device according to the preamble of the appended claim 1.

Such devices may be used in all conceivable arrangements, in which there is a desire to achieve a lead-through sealed with respect to an outer impermeable wall layer through an insulating wall for connection of air conducting members to the room inside the wall. Devices which are used for achieving an air intake and/or air outlet of so called insulated fans will be described so as to illustrate the invention, but this is not at all to be interpreted as any restriction of the field of use of the invention. These so called insulated fans are formed by a fan, which is surrounded by a house having a wall of the type meantioned above for obtaining an insulating for primarily fire and noise reason, but also against condensation. Such insulated fans are in some situations an obligation, for instance when air is transported from a plurality of apartments in a building. It is then usually a question of so called channel fans, i.e. fans being arranged in long air channels, where it is difficult to otherwise obtain a satisfying air flow.

The walls of the insulated fan houses have a considerable thickness for making it possible for the insulating layer to well fulfil its function, and it is absolutely necessary that sealed lead-throughs are created at the inlet into and the outlet from the impermeable house wall layer through the wall of the fan house and so that means are provided externally of the fan house for a tight external connection of air conducting members such as an air conducting channel to the house.

A device already known for achieving such a lead-through has a first tube having a circular cross-section, which is arranged outside the house for providing said connection means and has been provided with a flange folded radially outwardly, which has been led inside the impermeable house-wall layer, between this and the insulating layer, and which has through a surrounding point-welding in this way been secured to the house wall layer. The outer part of the lead-through has been formed in this way and the tightness with respect to the impermeable house wall layer has been established. Furthermore, this device already known comprises a second tube having a circular cross-section, which is arranged to extend from the interior of the house through an opening in the insulating layer and the outer house wall layer and a distance into the first tube. The second tube may then be internally secured to said first tube.

Although this device already known functions well, the present inventor has understood that it should be possible to save costs by modifying this construction and accordingly that the construction of this device already known would be too labour and material demanding and the device will by that be unnecessarily expensive to produce.

Another device already known for achieving a lead-through of the type discussed here has besides a very complicated and by that labour and material demanding construction also turned out to have a defective function, since it does not enable any sound insulating. This has been the case in known so called insulated fans having a lead-through with a rectangular cross-section for connection of air conducting channels having a rectangular cross-section to the fan. These insulated fans have been constructed by an inner metal case being opened at the opposite ends, in which a fan is arranged, and an outer metal casing, which has walls with an outer impermeable metal wall layer and an insulating layer located inside thereof. This outer casing, which is delimited by walls coated by metal and through which the one open end of the inner metal casing is intended to project so as to form the lead-through and through the ends thereof provide means for an external connection of an air conducting channel thereto. Thus, the fan is here in practise located in an air conducting channel, which is surrounded by double houses with an insulation therebetween, so that no real sound insulating is achieved. Furthermore, this device requires unnecessarily much material as a consequence of the arrangement of double houses and therefore become unnecessarily expensive.

The British patent specification GB 612 511 describes how a sealed lead-through of a water pipe through a wall of a building is achieved by moving a tube through the wall in question and applying a sealing means in the form of bitumen loaded Hessian junction strips or washers around the tube. These washers are then sealingly secured on one hand to the tube and on the other to the impermeable outer wall layer. This way of achieving a sealing at lead-throughs is comparatively complicated, in particular in the case of lead-through conduits for connection of air conducting members to a room inside the wall, to which the present invention is directed.

Furthermore, EP 0 284 752 describes a device of another type than that according to the present invention, and the sealing means of that device can only have a sealing function in roof lead-throughs, and it is not at all possible to use the technique shown therein for wall lead-throughs, since it would in such a case not function at all. That device has a roof covering foil not intended to bear sealingly externally against portions of a tube, but it is necessary to apply an upper part tube having an annular shirt for obtaining the sealing. Rainwater flowing downwardly will in this way not reach the joint between a collar and the mantle wall of a lower part tube for penetrating thereinto. Thus, there are no means arranged to create a surrounding sealing of the tube and an outer impermeable wall layer, but an indirect sealing is obtained only by arranging a "roof" over the joint between the tube and the outer impermeable roof layer. Accordingly, no sealing means comprises any portions of the impermeable wall layer surrounding the opening and adapted to bear externally against portions of the tube for sealing thereagainst. The invention achieves for sure by the cooperation of one single lead-through with the impermeable wall layer a sealed lead-through, while no sealing function is obtained in the device according to this European patent application until the upper part tube has been moved onto the lower part tube, and there will in fact never be completely tight between the lower part tube and the impermeable wall layer, which means that such a lead-through construction will not function for a wall, since water will then reach the joint between a foil and the lower part tube and penetrate therebetween.

### SUMMARY OF THE INVENTION

The object of the present invention is to find a remedy to the inconveniences mentioned above by providing a device which by very simple means enables the formation of a lead-through sealed with respect to an outer impermeable wall layer from the inner side of a wall having an insulating layer arranged internally of said impermeable layer and out through the wall for connection of air-conducting members to the room inside the wall.

This object is according to the invention obtained by providing a device according to the appended claim 1. Thanks to the fact that said sealing means comprises portions of the impermeable wall layer surrounding said opening and adapted to bear externally against portions of the tube for sealing thereagainst, a reliable surrounding sealing of the tube to the outer impermeable wall layer may be obtained in a simple and by that from the cost point of view favourable way without any requirement of any separate additional sealing means, but it is sufficient to tightly secure the portions of the impermeable wall layer surrounding the opening to portions of the tube for obtaining the sealing required.

According to an advantageous embodiment of the invention said ceiling means comprises a collar formed by the impermeable wall layer, folded outwardly from the rest thereof and surrounding said opening, which collar is adapted to externally bear against portions of the tube for sealing with respect thereto. By the creation of such a collar by the wall layer already there a sealing may in a simple way be established between the wall layer and the tube penetrating through the opening from the room inside the wall.

According to a still further advantageous embodiment of the invention said tube portions define a part of the extension of the tube having a larger cross-section than the part of the tube arranged to project to the exterior past the collar, and the collar has an inside cross-section substantially corresponding to said larger outside cross-section of the tube. The tube may by that on the application thereof comfortably be pushed from the interior through the opening with the outer portion freely passing said collar, at the same time as the collar still may be used for achieving an adequate sealing with respect to the tube portions having the larger cross-section.

According to an other advantageous embodiment of the invention the tube is adapted to be mounted in said opening by being pushed therethrough from the interior of the house, the collar is provided with stop members adapted to allow the passage of said tube part on such pushing through and be hit by said tube portions or tube regions adjacent therethrough for forming obstacles against further pushing through of the tube, and the collar is at a free extremity thereof folded inwardly so as to form said stop members and give them a lip-like character. Thanks to this construction of the collar it will be possible to by simple means define the position of the tube when it is pushed through the wall and also obtain a sealing of the outer wall layer with respect to the tube also in the axial direction.

According to still another advantageous embodiment of the invention the opening of the wall and the tube have substantially rectangular cross-sections, that part of the longitudinal extension of the tube which is arranged to extend through the wall has a first outside cross-section substantially corresponding to the cross-section of the wall opening, and the collar is arranged to be folded so that the inside cross-section delimited thereby along the extension of the collar from the wall substantially corresponds to a second outside cross-section of that part of the longitudinal extension of the tube which is adapted to project out of the wall. In this way it is possible at a given cross-section of the opening of the wall enable a connection of air conducting members having different cross-section dimensions to the connection means of the tube since the part of the tube projecting out of the wall may be designed in such a way that it is terminated by a desired cross-section and still a good sealing with respect to the outer wall layer is ensured by an adaption of the folding of the collar to the extension of the tube.

Further advantages as well as advantageous characteristics of the invention will appear from the following description and the other dependent claims.

### BRIEF DESCRIPTION OF THE DRAWINGS

With reference to the appended drawings, below follows a description of two devices according to two preferred embodiments of the invention cited as examples.

In the drawings:
- Fig. 1: is a partially sectioned lateral view of a fan having an insulated fan house, in which two devices according to a first embodiment of the invention are applied for the inlet and the outlet, respectively,
- Fig. 2: is an enlarged view of one of the inventional devices shown in Fig. 1,
- Fig. 3: is a sectioned view enlarged with respect to Fig. 2 of a part of the device according to the invention,
- Fig. 4: is a perspective view of the device according to a second preferred embodiment of the invention, which is arranged in connection with a house for an insulated fan, some parts of the house having been broken away and the insulating layer of the wall having been omitted for the sake of clearness,
- Fig. 5: is a partially sectioned view of the device according to Fig. 4 from above, some parts being broken away for better illustrating the construction of the device, and
- Fig. 6 and 7: are two enlarged detail views illustrating alternative embodiments of the tube of the embodiment of the invention illustrated in Fig. 4 and 5.

### DETAILED DESCRIPTION OF A PREFERRED EMBODIMENT OF THE INVENTION

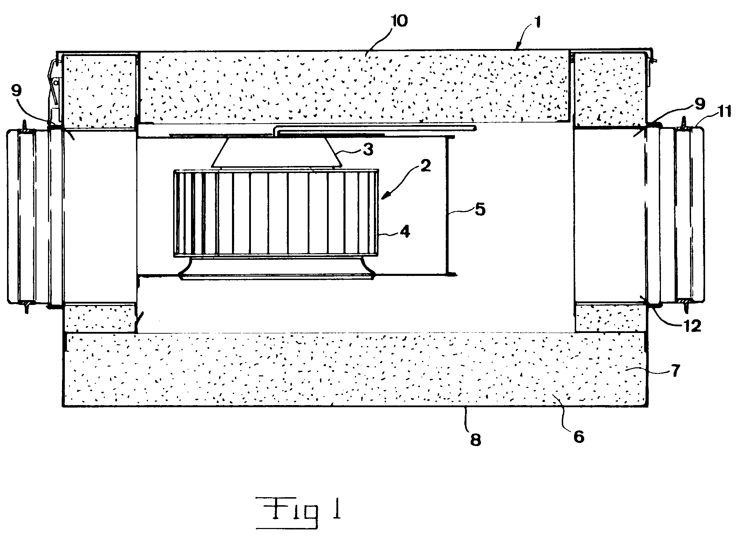

An example of an insulated fan, to which the device according to the invention has been applied, is illustrated in Fig. 1. Such an insulated fan has a house 1, in the interior of which a fan member 2, here a radial fan, is arranged in the form of an impeller or fan wheel 4 rotatable through a motor 3. The impeller 4 is surrounded by an inner fan house 5 for conducting air to the inside from the right in Fig. 1 from below to the impeller 4 and conducting air to the outside to the left in Fig. 1 on the level of the impeller. The components 2-5 are surrounded by a thick house wall 6, which is formed by an inner, comparatively thick layer 7 of insulating material and an external impermeable layer 8 located outside thereof. The insulating layer 7 is made of a material most suitable for the intended use of the fan, so as to for example be most suited for silencing of noise and fire protection. The outer layer 8 is made of a rigid material, usually galvanised metal sheet. Typical thickness of the insulating layer 7 and the outer layer 8 is 50 mm and 0,7 mm, respectively, but any arbitrary thicknesses are of course conceivable. The house wall 6 is arranged to form a completely air-tight surrounding of the very fan, apart from the openings 9 for the air intake and the air exhaust through the outer impermeable house wall layer 8. The house wall 6 also comprises a lid 10 air-tightly connectable to the rest of the house wall 6 and removable for offering access to the interior of the house for repair and maintenance purposes.

A fan with such a house is used on such places or under such operation conditions that require protection against for example condensation, fire and noise. When the fan is arranged for example close to a work place in a room, it may be a great need to apply sound insulation thereon by providing it with a suitable insulating layer 7. When the fan is arranged in a cold environment, where for example an outdoor temperature prevails and it conveys warmer air, it is important to protect it by such an insulating layer against condensation, which would seriously disturb the function of the fan and reduce the capacity thereof. The fire protection aspect has already been penetrated.

Furthermore, means 11 in the form of conventional tube sockets are arranged for tight external connection of the interior of the house to air conducting members, such as ventilating pipes. It is extremely important that these connection means 11 are applied while forming a tight connection to the outer impermeable house wall layer 8, so that air may only pass from the inside of the house and outwardly or in the opposite direction through the respective tube 12, which provides the connection means 11.

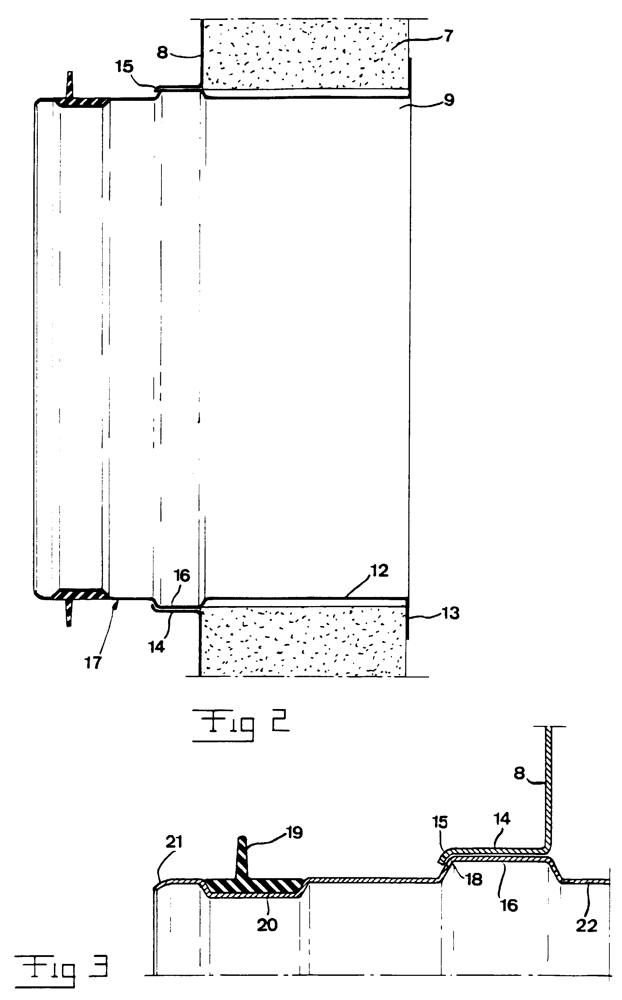

The construction of the device according to the invention for achieving such a lead-through is illustrated in Fig. 2 and will now be explained with reference made also to Fig. 1 and 3. The device has one single tube 12, which is adapted to be mounted in the opening 9 in the insulating layer 7 and the impermeable wall layer 8 by being pushed through the opening from the interior of the house. The tube 12 has a length exceeding the thickness of the house wall, so that the tube 12, when it has been pushed through the opening 9 so far that it will bear against the inner side of the wall through a rear flange 13, projects sufficiently far out of the house for forming a tube socket for a tight connection of an air conducting member thereto. The tube length exceeding the thickness of the house wall by 40 mm may be suitable when the wall thickness is 50 mm and the tube diameter is 125 mm, but this dimension information is only given by way of an example.

The outer impermeable house wall layer 8 is in the region of the opening 9 folded outwardly through a suitable shaping method for forming a collar 14 surrounding said opening. This collar 14 is at its free extremity folded inwardly while forming a surrounding lip 15.

The tube 12 has tube portions 16 extending over a part of the extension of the tube and having a larger outside diameter than that part 17 which is arranged to project towards the exterior past the collar 14. The collar 14 has in its turn an inside diameter substantially corresponding to said larger outside diameter of the tube, so that the tube 12 may be pushed from the inside through the opening 9 while letting the tube part 17 go free from the lip 15 of the collar to the position shown in Fig. 2 and 3, i.e. until the front edge of the tube portions 16 hits the lip 15 of the collar. Thus, the lip 15 functions as a position defining stop member and the tube 15 is in this position secured to the collar 14 and by that to the house wall layer 8 surroundingly, for instance by point-welding or by accommodating deformation of tube portion regions in the edge region and/or conversely according to for example the so called Tog-L-Loc®-method. The lip 15 is also designed to form an axial sealing between the collar 14 and the tube 12 by bearing against the surfaces 18 of the tube adjacent to the tube portions and extending transversally to the axis of the tube. Although it is indicated in the figures for the sake of illustration that it would be a distance between the lip 15 and the surfaces 18, but this is in practise not the case. The same is valid for the distances indicated between the tube portions 16 and the collar 14. The tight fixation of the tube portions 16 with respect to the collar 14 has neither been shown in the figures. Furthermore, it appears from Fig. 3 that the tube portions 16 have a larger outside diameter than the following tube part 22 extending through the opening but substantially the same diameter as the opening 9.

Furthermore, the free extremity of the tube 12 is in a conventional way provided with a surrounding slot 20 receiving a conventional rubber seal ring 19 for enabling an air tight connection of an air conducting tube to the tube 12 through pushing thereof on the outside of the tube and over a climbing chamfering 21 terminating the tube.

Accordingly, the device according to the invention achieves a lead-through form the interior of the fan house through the insulation and out to the exterior while providing connection means for external air conducting members and sealing against the outer impermeable house wall layer 8 by means of one single tube 12. This fact in combination with the simplicity through which the tube may be applied in the opening 9 lead to a remarkable saving of costs with respect to the prior art devices of this type in a production in large series.

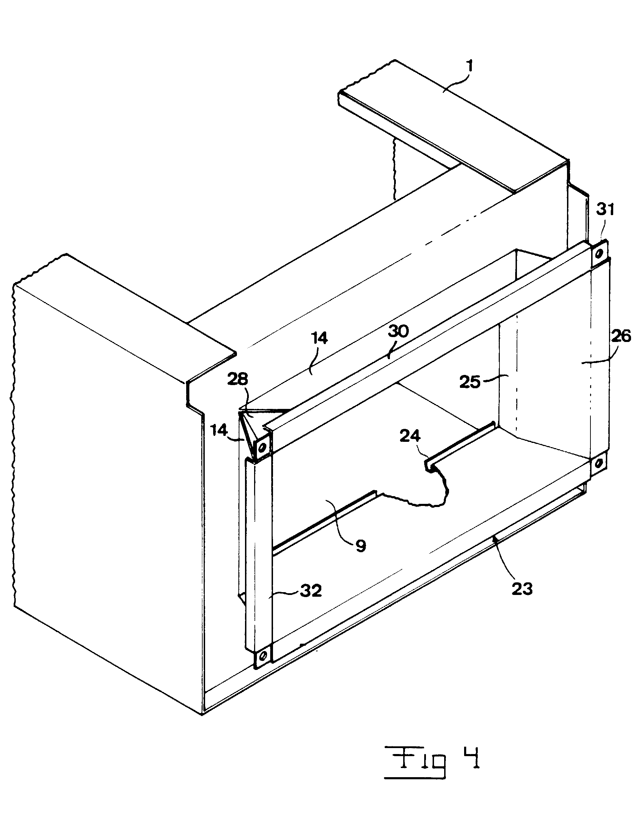

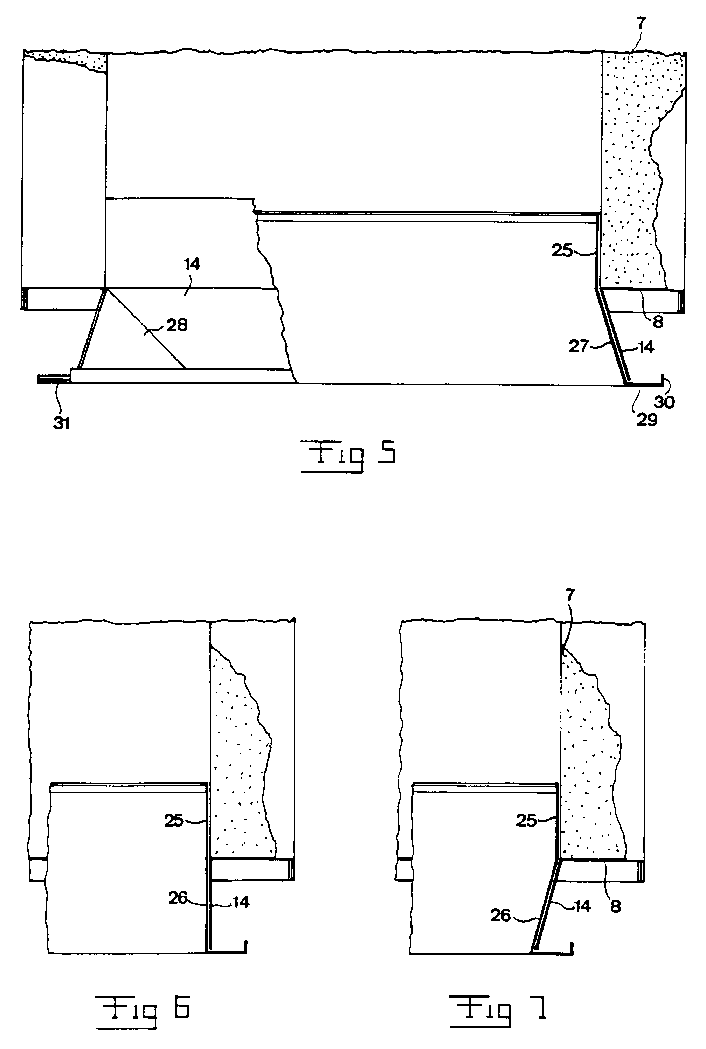

A device according to a second embodiment of the invention is illustrated in Fig. 4, said device differing from the first by the fact that the opening 9 has a rectangular cross-section and by that also the tube 23 led through the opening and out of the house 1 has a rectangular cross-section for connection of the interior of the insulated house to an air channel having a rectangular cross-section. The construction of this device will now be explained with references to both Fig. 4 and 5. This tube 23 is arranged to be pushed from the outside through the opening 9 and has at the innermost end means 24 for receiving an edge of a sheet secured to the fan arranged in the house.

The tube 23 has a first part 25, which is arranged to extend through the wall and has a first outside cross-section, which substantially corresponds to the cross-section of the wall opening 9. Furthermore, the tube has a second part 26, which projects outside the wall. The two opposite walls 27 of the second part 26 are folded outwardly with respect to the corresponding walls of the first part 25, so that the cross-section of the second part 26 increases in the direction towards the extremity thereof. The size of the opening 9 is determined by the size of the house and the fan arranged therein, so that in this way a connection of an air channel having a larger cross-section than the opening 9 to the interior of the house may be obtained.

The outer impermeable house wall layer 8 is in the region of the opening 9 folded outwardly by suitable shaping for forming a collar 14 surrounding said opening, said collar being folded so as to follow the extension of the second part 26 of the tube and bear externally thereagainst. Cut-outs 28, here making an angle of 45° with the fold line, have been made in said collar so as to enable this adaption. The collar 14 is in a similar way as the collar in the first embodiment sealingly secured to the tube 23.

The tube 23 is terminated in a conventional way by portions 29 and 30 folded outwardly and rearwardly, respectively, said portions 29 folded outwardly providing surfaces bearing against corresponding surfaces of an air conducting member on connection thereof to the tube. The portions 30 folded rearwardly are arranged to enable securing of an air conducting channel to the tube 23 by in conventional way laterally displacing C-profiles over these portions 30 and corresponding portions of the air conducting channel pointing in the opposite direction. Furthermore pieces 31 are arranged at each corner of the extremity of the tube 23 for enabling securing of an air conducting channel in a conventional way through a screw joint or the like. The device according to the invention may by this be secured to either an air conducting channel having portions folded rearwardly corresponding to the portions 30 or an air conducting member having securing means fitting to the holes in the pieces 31 without any modifications.

It is shown in Fig. 6 and 7 how the second part 26 and by that the collar 14 may be differently directed so as to enable connection of the interior of a house having an opening of a determined dimension to external air conducting members, such as air conducting channels, having different cross-sections. There are different standards for air conducting channels, and thanks to the possibility to fold the collar 14 in different directions one and the same house may be adapted to different tubes and by that air conducting channels according to different standards.

The invention is of course not restricted to the advantageous embodiments described above, but several possibilities to modifications thereof would be apparent to a man with skills in the art without departing from the basic idea of the invention.

The proportions of the different parts of the tube, the thickness of the insulating wall, the length of the collar and so on with respect to each other may be totally different than what has been illustrated above.

When it is mentioned that the lip of the collar bears against surfaces of the tube extending transversally to the axis of the tube or that an axial sealing is formed thereby, it should also be comprised that said surfaces have a perpendicular having a component in the radial direction and the sealing takes place in a direction being oblique with respect to the axis of the tube.

The wall may have more than two layers.

The definition air conducting members is intended to comprise every object conducting air by letting air flow therethrough - also without conducting the air in the meaning that the air is directed thereby. Thin filter elements are for instance comprised.

## Claims

1. A device forming a lead-through sealed with respect to an outer impermeable wall layer (8) from the inner side of the wall having an insulating layer (7) arranged internally of said impermeable layer and out through the wall, which comprises a tube (12, 23) designed to be arranged to extend through an opening (9) in the insulating layer and said outer wall layer, said tube extending from the inner side of the wall being arranged to project freely outside the wall, said device also comprising means (14-16, 27) adapted to create a surrounding sealing of the tube with respect to the outer impermeable wall layer, **characterized** in that said tube is arranged to provide means (11, 20, 21, 29-31) for a tight external connection of air conducting members to the room inside the wall there, and that said sealing means comprises portions (14) of the impermeable wall layer (8) surrounding said opening (9) and adapted to bear externally against portions (16, 27) of the tube (12, 23) for sealing thereagainst.

2. A device according to claim 1, characterized in that said sealing means comprises a collar (14) formed by said impermeable wall layer (8), folded outwardly therefrom and surrounding said opening (9), said collar being adapted to bear externally against portions (16, 27) of the tube for sealing with respect thereto.

3. A device according to claim 2, characterized in that said tube portions (16) define a part of the extension of the tube having a greater outside cross-section than that part (17) of the tube which is arranged to project towards the exterior past the collar (14), and that the collar has an inside cross-section substantially corresponding to said greater outside cross-section of the tube.

4. A device according to claim 3, characterized in that the tube (12) is adapted to be mounted in the opening (9) by being pushed through the wall from the room inside thereof, and the collar is provided with stop members (15) adapted to on such pushing through allow the passage of said tube part (17) and be hit by said tube portions or tube regions (18) adjacent thereto for forming an obstacle against further pushing through of the tube.

5. A device according to claim 4, characterized in that said stop members (15) are adapted to determine the position of the tube with respect to the house upon arranging the tube in the opening (9) in a position pushed through to abutment against the stop members.

6. A device according to claim 4 or 5, characterized in that said sealing means comprises stop members (15) adapted to surroundingly bear against surfaces (18) of the tube (12) extending in the longitudinal direction of the tube transversally to the axis of the tube.

7. A device according to any of claims 4-6, characterized in that the collar (14) is folded inwardly at the free extremity thereof so as to form said stop members (15) and give these a lip-like character.

8. A device according to any of claims 2-7, characterized in that the collar (14) is arranged to come to bear biasingly against said tube portions (16) on introduction of the tube (12) in said opening (9).

9. A device according to any of claims 2-8, characterized in that said tube portions (16, 27) are rigidly connected to the collar (14).

10. A device according to claim 9, characterized in that said tube portions (16, 27) are surroundingly rigidly connected to the collar (14).

11. A device according to claim 9 or 10, characterized in that said tube portions (16, 27) and the collar (14) are welded together.

12. A device according to claim 9 or 10, characterized in that said tube portions (16, 27) are connected to the collar (14) by accommodating deformation of tube portion regions into collar regions and/or conversely.

13. A device according to any of claims 3-7, characterized in that said tube (12) and the opening (9) of the house wall have substantially circular cross-section, and that the outside diameter of said tube portions (16) corresponds substantially to the inside diameter of the collar (14).

14. A device according to any of claims 1-12, characterized in that the opening (9) of the wall and the tube (23) have substantially rectangular cross-sections.

15. A device according to claims 2 and 14, characterized in that that part (25) of the longitudinal extension of the tube which is arranged to extend through the wall (6) has a first outside cross-section substantially corresponding to the cross-section of the wall opening, and that the collar (14) is adapted to be folded so that the inside cross-section delimited thereby corresponds to a second, outside cross-section of that part (26) of the longitudinal extension of the tube which is arranged to project out of the wall along the extension of the collar from the wall.

16. A device according to claim 15, characterized in that at least portions of the collar (14) are folded more than 90° out from the impermeable wall layer (8), so that said second cross section increases from the wall and outwardly.

17. A device according to claim 15, characterized in that at least portions of the collar (14) are folded less than 90° outwardly from the impermeable wall layer (8), so that said second cross-section decreases from the wall and outwardly.

18. A device according to claim 15, characterized in that the collar is folded substantially 90° out from the impermeable wall layer, so that said second cross-section from the wall and outwardly substantially corresponds to said first cross-section.

19. A device according to any of claims 14-18, characterized in that the tube (23) is adapted to be mounted in the opening (9) by being pushed through the wall from the outside thereof.

20. A device according to any of claims 14-19, characterized in that the free extremity of the tube (23) is terminated by a folding outwardly while forming surfaces (32) pointing in the longitudinal direction of the tube and intended to come to bear against corresponding surfaces of an air conducting member upon connection thereof, and that means (30, 31) for securing an air conducting member to the tube are arranged in connection with these surfaces.

21. A device according to claim 20, characterized in that said securing means comprise pieces (31) arranged in each corner of the free extremity of the tube fixed with aspect to the tube and provided with engaging means for enabling said securing by engaging co-operation of male or female members with said engaging means, such as by screw joint or the like.

22. A device according to claim 20 or 21, characterized in that said securing means comprise a portion of a free extremity of the tube folded rearwardly and following upon said bearing surfaces (32) so that the tube is terminated by portions (30) pointing back towards the wall (6) for enabling securing of an air conducting member having a corresponding design of its end thereto, but with portions folded back pointing in the opposite direction, by displacing C-profile-like securing members laterally over the two respective adjacent portions of the tube and the air conducting member folded rearwardly.

23. A device according to any of the preceding claims, characterized in that it is designed to form a lead-through through a wall (6) participating in the construction of the house (1) having an isolated inner room.

24. A device according to claim 23, characterized in that the inner room of the house has a fan (2-5) adapted to transport air through the tube (12, 23).

## Patentansprüche

1. Vorrichtung, welche von der Innenseite einer Wand und durch die Wand hindurch eine Durchführung ausbildet, welche bezüglich einer äußeren undurchlässigen Wandlage (8) isoliert ist, wobei die Wand eine isolierende Lage (7) aufweist, die intern von der undurchlässigen Lage angeordnet ist, umfassend ein Rohr (12, 23), welches ausgelegt ist, um in solch einer Weise angeordnet zu werden, daß es sich durch eine Öffnung (9) in der isolierenden Lage und der äußeren Wandlage erstreckt, wobei das sich von der Innenseite der Wand erstreckende Rohr in solch einer Weise angeordnet ist, daß es frei nach außen von der Wand vorsptingt, wobei die Vorrichtung ferner Mittel (14-16, 27) umfaßt, die ausgelegt sind, um eine umgebende Dichtung des Rohres bezüglich der äußeren undurchlässigen Wandlage zu bilden,
dadurch gekennzeichnet, daß
das Rohr angeordnet ist, um Mittel (11, 20, 21, 29-31) für eine feste externe Verbindung von Luftleitmitteln hin zu dem Innenraum der Wand bereitzustellen, und daß die Dichteinrichtung Abschnitte (14) der undurchlässigen Wandlage (8) umfaßt, welche die Öffnung (9) umgeben und welche ausgelegt sind, um extem gegen Abschnitte (16, 27) des Rohres (12, 23) zur diesbezüglichen Dichtung anzuliegen.

2. Vorrichtung nach Anspruch 1,
dadurch gekennzeichnet, daß
die Dichteinrichtung einen Kragen (14) umfaßt, der durch die undurchlässige Wandlage (8) gebildet ist, welche davon nach außen gefaltet ist und die Öffnung (9) umgibt, wobei der Kragen ausgelegt ist, um extern gegen Abschnitte (16, 27) des Rohres flir eine diesbezügliche Dichtung anzuliegen.

3. Vorrichtung nach Anspruch 2,
dadurch gekennzeichnet, daß
die Rohrabschnitte (16) einen Teil des Fortsatzes des Rohres bilden, welcher einen größeren Außenquerschnitt aufweist als der Teil (17) des Rohres, welcher angeordnet ist, um hin zu dem Äußeren über den Kragen (14) hinaus vorzuspringen, und daß der Kragen einen Innenquerschnitt aufweist, welcher im wesentlichen dem größeren äußeren Querschnitt des Rohres entspricht.

4. Vorrichtung nach Anspruch 3,
dadurch gekennzeichnet, daß
das Rohr (12) ausgelegt ist, um in der Öffnung (9) montiert zu werden, indem das Rohr durch die Wand von dem Innenraum davon geschoben wird, wobei der Kragen mit Anschlaggliedern (15) versehen ist, die ausgelegt sind, um bei solch einem Durchschieben den Durchtritt des Rohrteiles (17) zu ermöglichen und von den Rohrabschnitten oder Rohrbereichen (18) benachbart davon berührt zu werden, um ein Hindernis gegen weiteres Durchschieben des Rohres zu bilden.

5. Vorrichtung nach Anspruch 4,
dadurch gekennzeichnet, daß
die Anschlagglieder (15) ausgelegt sind, um die Position des Rohres beim Anordnen des Rohres in der Öffnung (9) in einer hinein- bzw. durchgeschobenen Position bei Anlage gegen die Stoppglieder mit Bczug auf das Gehäuse zu bestimmen.

6. Vorrichtung nach Anspruch 4 oder 5,
dadurch gekennzeichnet,
daß die Dichteinrichtung Anschlagglieder (15) umfaßt, welche ausgelegt sind, um umgebend gegen Flächen (18) des Rohres (12) anzuliegen, welche sich in Längsrichtung des Rohres transversal zu der Achse des Rohres erstrecken.

7. Vorrichtung nach einem der Ansprüche 4 bis 6,
dadurch gekennzeichnet, daß
der Kragen (14) nach innen an dem freien Ende davon gefaltet ist, um somit die Anschlagglieder (15) zu bilden und diesen einen lippenartigen Charakter zu verleihen.

8. Vorrichtung nach einem der Ansprüche 2 bis 7,
dadurch gekennzeichnet,
daß der Kragen (14) angeordnet ist, um vorgespannt gegen die Rohrabschnitte (16), beim Einführen des Rohres (12) in die Öffnung (9), anzuliegen.

9. Vorrichtung nach einem der Ansprüche 2 bis 8,
dadurch gekennzeichnet,
daß die Rohrabschnitte (16, 27) steif mit dem Kragen (14) verbunden sind.

10. Vorrichtung nach Anspruch 9,
dadurch gekennzeichnet, daß
die Rohrabschnitte (16, 27) umgebend steif mit dem Kragen (14) verbunden sind.

11. Vorrichtung nach Anspruch 9 oder 10,
dadurch gekennzeichnet, daß
die Rohrabschnitte (16, 27) und der Kragen (14) miteinander verschweißt sind,

12. Vorrichtung nach Anspruch 9 oder 10,
dadurch gekennzeichnet, daß
die Rohrabschnitte (16, 27) mit dem Kragen (14) unter Aufnahme einer Verformung der Rohrabschnittsbereiche in Kragenabschnitte und/oder umgekehrt verbunden sind.

13. Vorrichtung nach einem der Ansprüche 3 bis 7,
dadurch gekennzeichnet, daß
das Rohr (12) und die Öffnung (9) der Gehäusewand einen im wesentlichen kreisförmigen Querschnitt aufweisen, und daß der Außendurchmesser der Rohrabschnitte (16) im wesentlichen dem Innendurchmesser des Kragens (14) entspricht.

14. Vorrichtung nach einem der Ansprüche 1 bis 12,
dadurch gekennzeichnet, daß
die Öffnung (9) der Wand und das Rohr (23) im wesentlichen rechteckförmige Querschnitte aufweisen.

15. Vorrichtung nach den Ansprüchen 2 und 14,
dadurch gekennzeichnet, daß
der Teil der Längserstreckung (25) des Rohres, welcher angeordnet ist, um sich durch die Wand (6) zu erstrecken, einen ersten Außenquerschnitt aufweist, welcher im wesentlichen dem Querschnitt der Wandöffnung entspricht, und daß der Kragen (14) ausgelegt ist, um in solch eindr Weise gefaltet zu werden, daß der somit begrenzte Innenquerschnitt einem zweiten äußeren Querschnitt des Tciles (26) der Längserstreckung des Rohres entspricht, welcher angeordnet ist, um von bzw. aus der Wand entlang der Erstreckung des Kragens von der Wand vorzuspringen.

16. Vorrichtung nach Anspruch 15,
dadurch gekennzeichnet, daß
zumindest Abschnitte des Kragens (14) um mehr als 90° nach außen von der undurchlässigen Wandlage (8) gefaltet sind, so daß der zweite Querschnitt von der Wand und nach außen hin zunimmt.

17. Vorrichtung nach Anspruch 15,
dadurch gekennzeichnet, daß
zumindest Abschnitte des Kragens (14) um weniger als 90° nach außen von der undurchlässigen Wandlage (8) gefaltet sind, so daß der zweite Querschnitt von der Wand und nach außen hin abnimmt.

18. Vorrichtung nach Anspruch 15,
dadurch gekennzeichnet, daß
der Kragen im wesentlichen um 90° nach außen von der undurchlässigen Wandlage gefaltet ist, so daß der zweite Querschnitt von der Wand und nach außen hin im wesentlichen dem ersten Querschnitt entspricht.

19. Vorrichtung nach einem der Ansprüche 14 bis 18,
dadurch gekennzeichnet, daß
das Rohr (23) ausgelegt ist, um in der Öffnung (9) montiert zu werden, indem es durch die Wand von der Außenseite davon hindurchgeschoben wird.

20. Vorrichtung nach einem der Ansprüche 14 bis 19,
dadurch gekennzeichnet, daß
das freie Ende des Rohres (23) abgeschlossen wird durch Nachaußenfaltung, wobei Flächen (32) gebildet werden, die in Längsrichtung des Rohres zeigen und beabsichtigt sind, um an entsprechenden Flächen eines Luftleitgliedes anzuliegen, wenn dieses angeschlossen wird, und daß Mittel (30, 31) zum Befestigen eines Luftleitgliedes mit dem Rohr in Verbindung mit diesen Flächen angeordnet sind.

21. Vorrichtung nach Anspruch 20,
dadurch gekennzeichnet, daß
die Befestigungsmittel Teile (31) umfassen, die an jeder Ecke des freien Endes des Rohres angeordnet sind, und zwar befestigt mit Bezug auf das Rohr und bereitgestellt mit Eingriffsmitteln, um die Befestigung durch Eingriff von zusammenwirkenden männlichen oder weiblichen Gliedern mit den Eingriffsmitteln, wie z.B. mittels Schraubverbindung oder dergleichen, zu ermöglichen.

22. Vorrichtung nach Anspruch 20 oder 21,
dadurch gekennzeichnet, daß
die Befestigungsmittel einen Abschnitt eines freien Endes des Rohres umfassen, der rückwartig gefaltet ist und sich der Lagerfläche (32) anschließt, so daß das Rohr durch Abschnitte (30) abgeschlossen wird, welche rückwärtig hin zu der Wand (6) zeigen, um die Befestigung eines Luftleitgliedes mit einer entsprechenden Auslegung dessen Endes diesbezüglich zu ermöglichen, wobei jedoch Abschnitte, die zurückgefaltet sind, um in die entgegengesetzte Richtung zu zeigen, mittels Versetzung von C-profilartigen Befestigungsgliedern lateralwärts über die zwei jeweiligen benachbarten Abschnitte des Rohres und des Luftleitgliedes rückwärtig gefaltet sind.

23. Vorrichtung nach einem der vorangegangenen Ansprüche,
dadurch gekennzeichnet, daß
sie ausgelegt ist, um einen Durchtritt durch eine Wand (6) zu bilden, welche an dem Aufbau des Gehäuses (1) teilnimmt, wobei das Gehäuse einen isolierten Innenraum aufweist.

24. Vorrichtung nach Anspruch 23,
dadurch gekennzeichnet, daß
der Innenraum des Gehäuses einen Lüfter (2-5) umfaßt, welcher ausgelegt ist, um Luft durch das Rohr (12, 23) zu transportieren.

## Revendications

1. Dispositif formant une traversée étanche par rapport à une couche imperméable extérieure de paroi (8), du côté intérieur de la paroi, ayant une couche isolante (7) placée à l'intérieur de ladite couche imperméable, à l'extérieur à travers la paroi, qui comprend un tube (12, 23) conçu pour être monté de façon à passer par une ouverture (9) faite dans la couche isolante et dans ladite couche extérieure de paroi, ledit tube, s'étendant à partir du côté intérieur de la paroi, étant placé de façon à faire librement saillie à l'extérieur de la paroi, ledit dispositif comprenant aussi des moyens (14 à 16, 27) faits pour créer un étanchement périphérique du tube par rapport à la couche imperméable extérieure de paroi, caractérisé par le fait que ledit tube est agencé pour fournir des moyens (11, 20, 21, 29 à 31) pour une jonction extérieure étanche d'éléments conducteurs d'air à l'espace intérieur à la paroi à cet endroit, et que lesdits moyens d'étanchement comprennent des parties (14) de la couche imperméable de paroi (8) qui entourent ladite ouverture (9) et sont faites pour s'appuyer extérieurement contre des parties (16, 27) du tube (12, 23) pour produire l'étanchement vis-à-vis de celles-ci.

2. Dispositif selon la revendication 1, caractérisé par le fait que lesdits moyens d'étanchement comprennent une collerette (14) formée par ladite couche imperméable de paroi (8), pliée vers l'extérieur à partir de celle-ci et entourant ladite ouverture (9), ladite collerette étant faite pour s'appuyer extérieurement contre des parties (16, 27) du tube pour produire l'étanchement par rapport à celles-ci.

3. Dispositif selon la revendication 2, caractérisé par le fait que lesdites parties (16) du tube forment une partie de l'étendue du tube ayant une plus grande section extérieure que la partie (17) du tube qui est placée pour faire saillie vers l'extérieur au-delà de la collerette (14), et que la collerette a une section intérieure qui correspond sensiblement à ladite section extérieure plus grande du tube.

4. Dispositif selon la revendication 3, caractérisé par le fait que le tube (12) est fait pour être monté dans l'ouverture (9) par poussée à travers la paroi depuis l'espace intérieur de celle-ci, et la collerette est pourvue d'éléments d'arrêt (15) faits pour, lors de ladite poussée, permettre le passage de ladite partie (17) du tube et être heurtés par lesdites parties ou régions (18) du tube adjacentes à celle-ci pour faire obstacle à une poussée supplémentaire du tube.

5. Dispositif selon la revendication 4, caractérisé par le fait que lesdits éléments d'arrêt (15) sont faits pour déterminer la position du tube par rapport au logement lors du montage du tube dans l'ouverture (9) dans une position poussée jusqu'à appui contre les éléments d'arrêt.

6. Dispositif selon l'une des revendications 4 et 5, caractérisé par le fait que lesdits moyens d'étanchement comprennent des éléments de butée (15) faits pour s'appuyer en les entourant contre des surfaces (18) du tube (12) qui s'étendent dans la direction longitudinale de celui-ci transversalement par rapport à l'axe de celui-ci.

7. Dispositif selon l'une des revendications 4 à 6, caractérisé par le fait que la collerette (14) est pliée vers l'intérieur à son extrémité libre de façon à former lesdits éléments de butée (15) et leur donner un caractère du genre lèvre.

8. Dispositif selon l'une des revendications 2 à 7, caractérisé par le fait que la collerette (14) est agencée pour venir s'appuyer avec poussée contre lesdites parties (16) du tube (12) lors de l'introduction de ce dernier dans ladite ouverture (9).

9. Dispositif selon l'une des revendications 2 à 8, caractérisé par le fait que lesdites parties (16, 27) du tube sont jointes rigidement à la collerette (14).

10. Dispositif selon la revendication 9, caractérisé par le fait que lesdites parties (16, 27) du tube sont jointes rigidement à la collerette (14) en étant entourées par celle-ci.

11. Dispositif selon l'une des revendications 9 et 10, caractérisé par le fait que lesdites parties (16, 27) du tube et la collerette (14) sont soudées ensemble.

12. Dispositif selon l'une des revendications 9 et 10, caractérisé par le fait que lesdites parties (16, 27) du tube sont jointes à la collerette (14) par ajustement de déformations de régions de ces parties dans des régions de la collerette et/ou inversement.

13. Dispositif selon l'une des revendications 3 à 7, caractérisé par le fait que ledit tube (12) et l'ouverture (9) de la paroi du logement sont de section sensiblement circulaire et que le diamètre extérieur desdites parties (16) du tube correspond sensiblement au diamètre intérieur de la collerette (14).

14. Dispositif selon l'une des revendication 1 à 12, caractérisé par le fait que l'ouverture (9) de la paroi et le tube (23) sont de section sensiblement rectangulaire.

15. Dispositif selon les revendications 2 et 14, caractérisé par le fait que la partie (25) de l'étendue longitudinale du tube qui est agencée pour traverser la paroi (6) a une première section extérieure qui correspond sensiblement à la section de l'ouverture de la paroi, et que la collerette (14) est faite pour être pliée de façon que la section intérieure qu'elle délimite corresponde à une deuxième section extérieure de la partie (26) de l'étendue longitudinale du tube qui est agencée pour faire saillie de la paroi le long de l'étendue de la collerette à partir de la paroi.

16. Dispositif selon la revendication 15, caractérisé par le fait qu'au moins des parties de la collerette (14) sont pliées de plus de 90° hors de la couche imperméable de paroi (8), de sorte que ladite deuxième section augmente de la paroi vers l'extérieur.

17. Dispositif selon la revendication 15, caractérisé par le fait qu'au moins des parties de la collerette (14) sont pliées de moins de 90° en dehors de la couche imperméable de paroi (8), de sorte que ladite deuxième section diminue de la paroi vers l'extérieur.

18. Dispositif selon la revendication 15, caractérisé par le fait que la collerette est pliée sensiblement de 90° hors de la couche imperméable de paroi, de sorte que ladite deuxième section, de la paroi vers l'extérieur, correspond sensiblement à ladite première section.

19. Dispositif selon l'une des revendications 14 à 18, caractérisé par le fait que le tube (23) est fait pour être monté dans l'ouverture (9) par poussée à travers la paroi depuis l'extérieur de celle-ci.

20. Dispositif selon l'une des revendications 14 à 19, caractérisé par le fait que l'extrémité libre du tube (23) se termine par un pliage vers l'extérieur avec formation de surfaces (32) pointant dans la direction longitudinale du tube destinées à venir s'appuyer contre des surfaces correspondantes d'un élément conducteur d'air lors de la jonction de celui-ci, et que des moyens (30, 31) de fixation d'un élément conducteur d'air au tube sont prévus en association avec ces surfaces.

21. Dispositif selon la revendication 20, caractérisé par le fait que lesdits moyens de fixation comprennent des pièces (31) placées dans chaque coin de l'extrémité libre du tube, fixes par rapport à celui-ci et pourvues de moyens d'engagement permettant ladite fixation par coopération par engagement d'éléments mâles ou femelles avec lesdits moyens d'engagement, par exemple par joint à vis ou analogue.

22. Dispositif selon l'une des revendications 20 et 21, caractérisé par le fait que lesdits moyens de fixation comprennent une partie d'une extrémité libre du tube pliée vers l'arrière et faisant suite auxdites surfaces d'appui (32) de façon que le tube se termine par des parties (30) pointant en arrière vers la paroi (6) pour permettre la fixation d'un élément conducteur d'air ayant une forme de son extrémité correspondant à celui-ci, mais avec des parties pliées en arrière pointant dans la direction opposée, par déplacement latéral d'éléments de fixation du genre profil en C sur les deux parties adjacentes respectives du tube et de l'élément conducteur d'air pliées en arrière.

23. Dispositif selon l'une des revendications précédentes, caractérisé par le fait qu'il est conçu pour former une traversée d'une paroi (6) participant à la construction du logement (1) ayant un espace intérieur isolé.

24. Dispositif selon la revendication 23, caractérisé par le fait que l'espace intérieur du logement contient un ventilateur (2 à 5) fait pour déplacer de l'air à travers le tube (12, 23).
